# EUROPEAN PATENT SPECIFICATION

(11) **EP 4 261 082 B1**
(45) Date of publication and mention of the grant of the patent: **18.02.2026**
(21) Application number: 22185637.0
(22) Date of filing: 19.07.2022
(51) Int. Cl.: B60Q 3/208, B60Q 3/74, B60Q 3/78, B60Q 3/82, B60J 7/00, B60J 7/02

(54) **ROLLER BLIND SIDE SLIDING RAIL DEVICE OF STRIP LAMP FOR AN AUTOMOTIVE**
GLEITSCHIENENVORRICHTUNG FÜR EIN ROLLO MIT BELEUCHTUNG FÜR EIN AUTOMOBIL
DISPOSITIF DE RAIL COULISSANT POUR UN ENROULEUR DE TOILE POUR VEHICULE COMPORTANT UN DISPOSITIF D'ILLUMINATION

(30) Priority: 13.04.2022 CN 202210389571
(43) Date of publication of application: 18.10.2023
(73) Proprietor: Foshan Baitai Auto Accessories Co., Ltd, Guangdong 528000 (CN)
(72) Inventor: Xia, Yong, Foshan city, 528000 (CN)
(74) Representative: Cleanthous, Marinos

(56) References cited:
- WO-A1-2018/206600
- CN-A- 109 131 061
- CN-A- 112 265 435
- DE-A1- 102016 101 873
- DE-A1- 102018 123 196

## Description

### TECHNICAL FIELD

The present invention relates to a roller blind side sliding rail device of a strip lamp, and belongs to the technical field of roller blind side sliding rail devices of strip lamps.

### BACKGROUND

A roller blind light emitting diode (LED) lamp is oneof automobile parts,which is generally installed in a roller blind of an automobile to provide lighting for a driver.

At present, for a commercially available roller blind LED lamp side pole, lightof an LED lamp strip is transmitted via a fiber round bar, which causes the problems that the transmitted light is not bright and that the light is weak when it is seen from a distance. Upper and lower parts of an aluminum profile of the side pole are connected only by one position in the middle; the intensity of the upper part is not enough to add other accessories; and furthermore, an opening in the right side is easy to deform, which affects the smooth operation of a rollerblind.
D1 (WO2018206600) disclosed a protection device having a flexible textile fabric which is displaceable along a guide direction between a compact, stored rest position and a protection position, outstretched flat at least in sections, a guide device fixed to the vehicle - in a mounted state - on which the flexible textile fabric is guided in a linear manner along the guide direction.
D2 (CN112265435A) discloses an automobile skylight with an atmosphere lamp; the automobile skylight comprises a skylight assembly and a skylight atmosphere lamp assembly; the skylight assembly comprises askylight sliding rail and a skylight cross beam; the automobile skylight further comprises an atmosphere lamp fixing support, the atmosphere lamp fixing support is fixed to the skylight sliding rail, and an open mounting groove is formed in the atmosphere lamp fixing support; the skylight atmosphere lamp assembly is fixed in the mounting groove.
D3 (DE102018123196) discloses a vehicle roof with a lighting element for illuminating a vehicle interior, the lighting element being designed as a light guide or light-emitting diode strip.
D4 (DE102016101873) discloses vehicle roof with a roof opening and two guide rails for guiding a movable shading element for shading the roof opening, the shading element being a roller blind, and the guide rail containing a receptacle, in which a lighting element is arranged.
D5 (CN109131061A) discloses a panoramic skylight ambient lamp slide rail structure including an ambient light slide rail, a light guide mount bracket is arranged beside that atmosphere lamp slide rail, thelight guide mounting bracket is provided with a transparent light guide, a sealing strip mounting groove is arrange on the light guide mounting bracket, and a locking protrusion is arranged on the atmosphere lamp slide rail.

### SUMMARY

In order to solve the technical problems in the prior art, the present invention provides a roller blind side sliding rail device of a strip lamp for an automotive with inclined light and lower potential safety hazard, as defined by the features of claim 1. Optional embodiments are defined by the features of dependent claims 2-5.

It can be known from the above technical solution: (1) Compared with an existing manner, the roller blind side sliding rail device of the strip lamp achieves better light transmission after an irradiation direction of an LED lamp is deflected, and light is clearly visible from a distance.

Compared with the existing manner, the roller blind side sliding rail device of the strip lamp has the advantages that an original insertion slot is eliminated; after the rib for the upper and lower parts is added, the connection strength of the upper and lower parts is higher, and it is safer to add an accessory to the upper part. Furthermore, an opening on the right side of the aluminum profile is difficult to deform, which will not affect the smooth operation of the roller blind. The LED lamp panel and a roller blind box body are slantways mounted, so that lighting for a compartment is guaranteed, and the light is prevented from being directly irradiated to eyes of a driver to cause discomfort, thus avoiding the potential safetyhazard.

Compared with the existing manner, the roller blind side sliding rail device of the strip lamp has the advantages that a lamp panel in a roller blind LED lamp is routed in a groove and a routing hole of the groove, so that it is convenient to mount, repair, and remove lines, and this LED lamp is also beautiful andelegant.

Compared with the existing manner, the roller blind side sliding rail device of the strip lamp has the advantages that the button switch is added at the tail end of the side pole, so that the button switch can be used to control the roller blind to be spread and rolled up without using a remote key; and the roller blind LED lamp has a simple structure and small volume.

Compared with the existing manner, the roller blind side sliding rail device of the strip lamp has the advantages that a bottom surface of the fixing component in the roller blind LED lamp is in contact with an aluminum part of the side pole in a large area, which effectively conducts heat generated during use of the light, and the service life of a product isprolonged.

### BRIEF DESCRIPTION OF THE DRAWINGS

FIG. 1 is a schematic structural diagram of an existing electric roller blind side pole strip lamp;
FIG. 2 is a schematic structural diagram of a roller blind side sliding rail device of a strip lamp provided by the present invention;
FIG. 3 is a schematic structural diagram of a main body of a roller blind side sliding rail device of a strip lamp provided by the present invention;
FIG. 4 is a schematic three-dimensional structural diagram of a roller blind side sliding rail device of a strip lamp provided by the present invention;
FIG. 5 is a schematic diagram of a mounting structure of a button switch of a roller blind side sliding rail device of a strip lamp provided by the present invention;
FIG. 6 is a schematic diagram of a cross-sectional structure of a roller bind provided with a roller blind side sliding rail device of a strip lamp provided by the present invention;
FIG. 7 is a schematic structural diagram of a top view of a roller blind side sliding rail device of a strip lamp provided in a roller bind, provided by the present invention;
FIG. 8 is a schematic structural diagram of a button switch in a roller blind side sliding rail device of a strip lamp provided by the present invention.

### DETAILED DESCRIPTION OF THE EMBODIMENTS

The present invention is specifically described in detail below in combination with the accompanying drawings and embodiments, and the content of the present invention is not limited to the following embodiment.

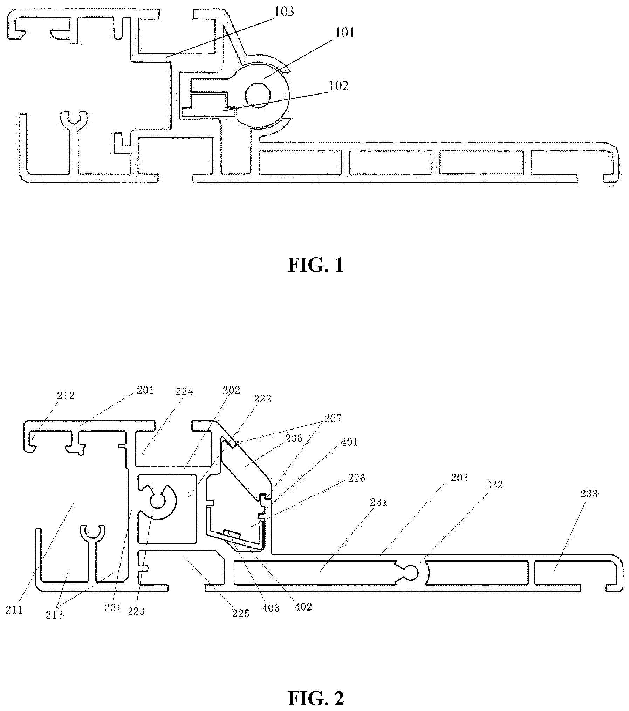

An existing electric roller blind side pole strip lamp in the prior art is illustrated in FIG. 1, light of an LED lamp strip 102 is transmitted via a round bar 101, which causes the problems that the transmitted light is not bright and that the light is weak when it is seen from a distance. Upper and lower parts of an aluminum profile of the side pole are connected only by one position in the middle; the intensity is not enoughto add other accessories to an insertion slot 103 and the upper part; and furthermore, an opening in the right side is easy to deform, which affects the smooth operation of a rollerblind.

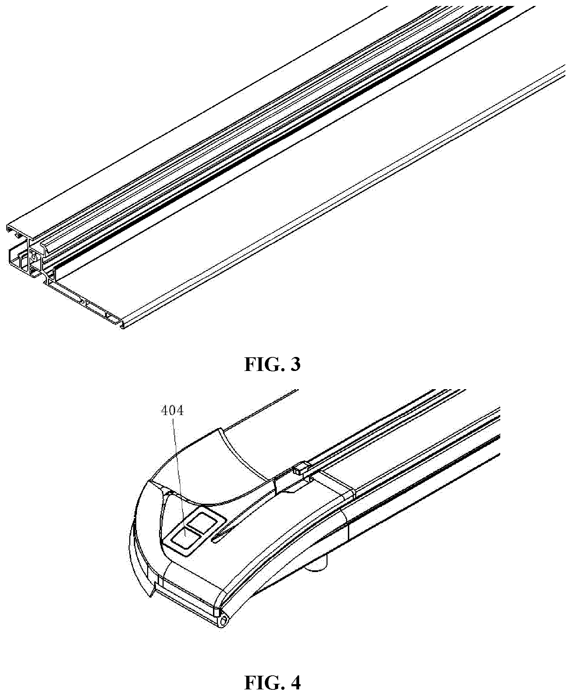

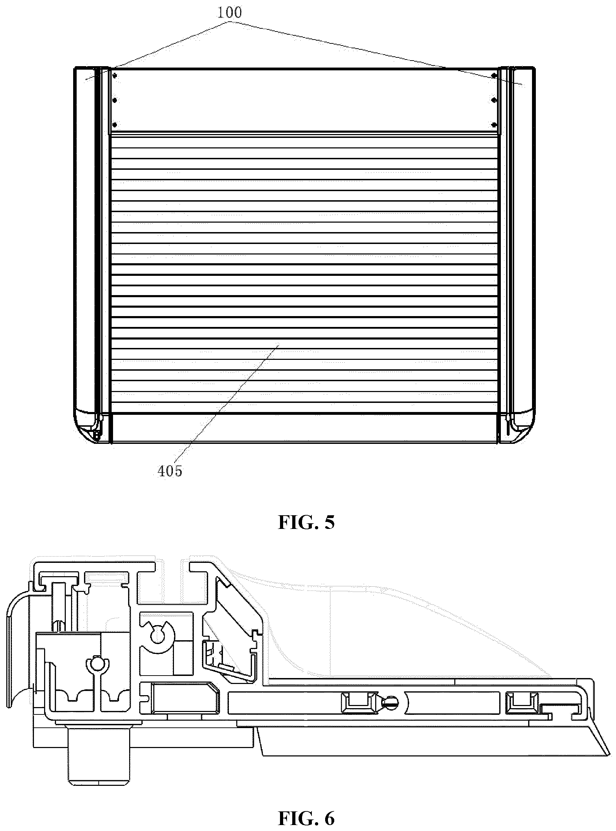

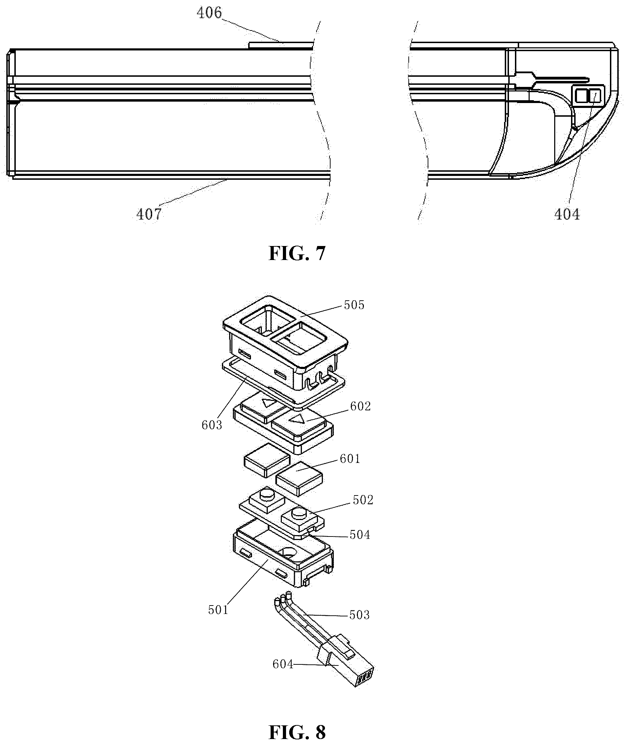

Referring to FIG. 2 to FIG. 8, FIG. 2 is a schematic structural diagram of aroller blind side sliding rail device 100 of a strip lamp provided by this embodiment; FIG. 3 is a schematic structural diagram of a main body of a roller blind side sliding rail device of a strip lamp provided by this embodiment; FIG. 4 is a schematic diagram of a mounting structure of a button switch of a roller blind side sliding rail device of a strip lamp provided by this embodiment; FIG. 5 is a schematic diagram of anoverallstructure of a roller blind provided with the roller blind side sliding rail device of a strip lamp provided by this embodiment; FIG. 6 is a schematic diagram of a cross-sectional structure of a roller blind provided with a roller blind side sliding rail device of a strip lamp provided by this embodiment; FIG. 7 is a schematic diagram of a top view of a roller blind provided with a roller blind side sliding rail device of a strip lamp provided by this embodiment; and FIG. 8 is a schematic structural diagram of a button switch in a roller blind side sliding rail device of a strip lamp provided by this embodiment. Compared with the prior art, this embodiment has the advantages that the roller blind side sliding rail device of a strip lamp cooperates with a new material lampshade after an irradiation direction of an LED lamp is deflected, thus achieving better light transmission, and light is clearly visible from a distance. An original insertion slot is eliminated; after a rib for the upper and lower parts is added, the connection strength of the upper and lower parts is higher, and it is safer to add an accessory to the upper part. Furthermore, an opening on the right side of the aluminum profile is difficult to deform, which will not affect the smooth operation of the roller blind. A button switch is added at a tail end of a left side pole, so that the button switch can be used to control a roller blind to be spread and rolled up without using a remote key.

Specifically, this embodiment provides a roller blind side sliding rail device of a strip lamp, including an LED lamp panel and a fixing component used for fixing the LED lamp panel, and including: aside pole 201, a lamp strip mounting member 202, and a bottom plate 203. The side pole and the lamp strip mounting member form the roller blind side sliding rail device of the strip lamp together with the bottom plate after being connected in parallel.

A recessed functional groove 211 is formed in the side pole 201 in a direction opposite to the lamp strip mounting member; a top of the functional groove is provided with an inside adhesive tape insertion slot 212 facing to the interior of the functional groove, and a bottom is provided with a drainage slot 213 facing to the interior of the functional groove.

The lamp strip mounting member 202 is connected to the side pole 201 through a rib 221; on the basis that the rib is provided with a chamber 222 defining a routing slot, a first connecting slot 223 for fastening is formed in the routing slot; an upward accessory fixing slot 224 and a downward accessory fixing slot 225 are convexly arranged upwardly and downwardly on the basis of the routing slot; a lamp strip mounting cavity 226 is provided on outer side walls of the routing slot and the upward accessory fixing slot in a direction opposite to the outside pole; the lamp strip mounting cavity is provided with a lampshade mounting snap-in opening 227 in a manner of being inclined towards the outer side walls of the routing slot and the upward accessory fixingslot.

The bottom plate 203 extends along an extending direction of the downward accessory fixing slot that is perpendicular to the rib and is located below the lamp strip mounting cavity; the bottom plate is hollowed to form a fixing chamber 231 for mounting a connector; a second connecting slot 232 for fastening is formed in the fixing chamber; and a downward outside adhesive tape insertion slot 233 is provided in an outer side of the fixing chamber and is used for mounting an outside adhesive tape 407.

In some optional embodiments, a bottom of the lamp strip mounting cavity is provided with an inclined lamp strip insert mounting slot with an inclined step; a lamp strip insert is a U-shaped slot 402; a lamp strip 403 is mounted at a slot bottom of the lamp strip insert; a lamp strip insert snap-in protrusion which faces to the interior of the lamp strip mounting cavity is arranged at a position, corresponding to a U-shaped notch of the lamp strip insert, on the inclined lamp strip insert mounting slot and is used for limiting the lamp strip insert.

In some optional embodiments, the snap-in opening of a lampshade 236 is inclined, and the snap-in protrusion is snapped into a step snap-in opening of the lampshade; an upwards step snap-in protrusion of the lampshade snap-in opening is snapped into a grooved snap-in opening of the lampshade; and the lampshade is inserted and is slantways snapped into the lampshade snap-in opening according to a preset angle.

In some optional embodiments, an inclination angle between the lampshade and the rib of the lamp strip mounting cavity ranges from 15 degrees to 85 degrees. Preferably, the inclination angle between the lampshade and the rib of the lamp strip mounting cavity is 30 degrees.

In some optional embodiments, the downward accessory fixing slot is a mounting and fixing slot for a roller blind 405; and a side wall of the mounting and fixing slot for a roller blind is provided with a convex body which protrudes into the mounting and fixing slot for a roller blind and is used for limiting the roller blind.

In some optional embodiments, wall thicknesses of all parts of the roller blind side sliding rail device of the strip lamp are consistent. The roller blind side sliding rail device of the strip lamp is prepared from an aluminum alloyprofile.

In some optional embodiments, a button switch (i.e., the button switch 404) of the roller blind side sliding rail device of the strip lamp includes a side pole switch shell 501, a micro switch 502, a switch power line 503, a switch circuit board 504, and a switch cover 505.

The side pole switch shell is a shell in which a switch mounting cavity is recessed, and an outer wall is provided with a fastener accessory which is mounted to the mounting slot on the roller blind side sliding rail device of the striplamp.

The switch circuit board is mounted at an inner bottom of the switch mounting cavity.

The micro switch is mounted in the switch mounting cavity, and a controlbutton of the switch is located at an upper part of the switch circuitboard.

The switch cover is covered on the switch mounting cavity through cooperation between a buckle on an outer wall and a snap-in structure on an inner wall of the switch mounting cavity, so as to cover a functional component of the switch into the switch mounting cavity.

The switch power line penetrates through the side pole switch shell, with one end connected to the switch circuit board and the other end located outside the switch shell.

In some optional embodiments, the micro switch is provided with a microswitch button cap 601 which is buckled on and wraps the microswitch.

In some optional embodiments, a switch soft rubber cover 602 is arranged on an outer side of the micro switch button cap, and is buckled on and wraps the micro switch button cap.

In some optional embodiments, a waterproof rubber pad 603 isarranged between the side pole switch shell and the mounting slot on the roller blind side sliding rail device of the striplamp.

In some optional embodiments, an end socket of the switch power line that is located outside the switch shell is provided with a wiring connector clip 604.

In some optional embodiments, the bottom surface is in contact with a roller blind box body in a large area, which effectively conducts heat generated during use of light, so that the product is protected from being damaged by overheat during use, and the service life of the product is prolonged.

## Claims

1. A roller blind side sliding rail device of a strip lamp for an automobile, comprising
a light emitting diode (LED) lamp panel and a fixing component used for fixing the LED lamp panel, and comprising: a side pole (201), a lamp strip mounting member (202) used for mounting a base of a lamp strip, and a bottom plate (203), wherein the side pole (201) and the lamp strip mounting member(202) are connected with each other and form a roller blind side sliding rail device of the strip lamp together with the bottom plate (203); the roller blind side sliding rail device is **characterized in that**
the side pole (201) defines an opening at a first side configured to mount a roller blind, and a recessed functional groove (211) communicating with the opening formed in the side pole (201) in a direction opposite to the lamp strip mounting member (202); an inner top wall of the functional groove (211) is provided with an inside adhesive tape insertion slot (212) facing to an interior of the functional groove (211), and an inner bottom wall of the functional groove (211)is provided with a drainage slot (213) facing to the interior of the functional groove (211);
the lamp strip mounting member is connected to the side pole (201) through a rib (221), the rib (221) is arranged at a second side of the side pole (201) opposite away from the first side and is connected between the top wall of the side pole (201) and the bottom wall of the side pole (201); the rib (221) is provided with a chamber (222) defining a routing slot, a tail end of the roller blind side sliding rail device of the strip lamp is provided with a button switch mounting hole with a mounted button switch (404), the button switch (404) is routed and connected to the routing slot and then connected to a controller on a roller blind box body, so as to control a roller blind to be opened and closed, an upward accessory fixing slot (224) and a downward accessory fixing slot (225) are convexly arranged upwardly and downwardly from the chamber (222); the lamp strip mounting member further defines a lamp strip mounting cavity (226) provided on side walls of the chamber (222) and the upward accessory fixing slot (224) in a direction opposite away from the side pole (201) for fixing the whole lamp strip (403) in the lamp strip mounting cavity (226), the lamp strip mounting cavity (226) is provided with a lampshade mounting snap-in opening (227) in a manner of being inclined away from outer side walls of the chamber (222) and the upward accessory fixing slot (224) and facing oppositely away from the side pole (201); and a lampshade (236) is is inserted into the lampshade mounting snap-in opening (227);
a bottom wall of the lamp strip mounting cavity (226) is connected with the bottom plate (203).

2. The roller blind side sliding rail device of the strip lamp according to claim 1, wherein a bottom of the lamp strip mounting cavity (226) is provided with an inclined lamp strip insert mounting slot with an inclined surface; a lamp strip insert defines a U-shaped slot (402); the lamp strip (403) is mounted at a bottom of the U-shaped slot (402); a lamp strip insert snap-in protrusion (401) which faces an interior of the lamp strip mounting cavity (226) is arranged at a position, corresponding to a U-shaped notch of the lamp strip insert, on the inclined lamp strip insert mounting slot and is used for limiting the lamp strip insert.

3. The roller blind side sliding rail device of the strip lamp according to claim 2, wherein
a snap-in protrusion of the lampshade (236) is inclined, and the snap-in protrusion is snapped into the lampshade snap-in opening (235); and the lampshade (236) is inserted and is slantways snapped into the lampshade snap-in opening (235) at a preset angle.

4. The roller blind side sliding rail device of the strip lamp according to claim 3, wherein an inclination angle between the lampshade (236) and the rib (221) ranges from 0 degree to 90 degrees.

5. The roller blind side sliding rail device of the strip lamp according to claim 4, wherein the inclination angle between the lampshade (236) and the rib (221) is 30 degrees.

## Patentansprüche

1. Seitengleitschienenvorrichtung für ein Rollo einer Lichtleiste für ein Kraftfahrzeug, umfassend ein Leuchtdioden (LED)-Lampenpanel und eine zur Befestigung des LED-Lampenpanels dienende Befestigungskomponente, sowie umfassend: einen Seitenholm (201), ein zur Montage einer Basis eines Leuchtstreifens dienendes Leuchtstreifenmontageelement (202) und eine Bodenplatte (203), wobei der Seitenholm (201) und das Leuchtstreifenmontageelement (202) miteinander verbunden sind und zusammen mit der Bodenplatte (203) eine Seitengleitschienenvorrichtung für ein Rollo der Lichtleiste bilden; wobei die Seitengleitschienenvorrichtung für ein Rollo **dadurch gekennzeichnet ist, dass** der Seitenholm (201) eine an einer ersten Seite zur Montage eines Rollos konfigurierte Öffnung und eine vertiefte Funktionsnut (211) definiert, die mit der im Seitenholm (201) ausgebildeten Öffnung in einer dem Leuchtstreifenmontageelement (202) entgegengesetzten Richtung kommuniziert; wobei eine innere obere Wand der Funktionsnut (211) mit einem zum Inneren der Funktionsnut (211) gerichteten inneren Klebebandeinsteckschlitz (212) versehen ist, und eine innere untere Wand der Funktionsnut (211) mit einem zum Inneren der Funktionsnut (211) gerichteten Entwässerungsschlitz (213) versehen ist; wobei das Leuchtstreifenmontageelement mit dem Seitenholm (201) über einen Steg (221) verbunden ist, wobei der Steg (221) an einer von der ersten Seite abgewandten zweiten Seite des Seitenholms (201) angeordnet und zwischen der oberen Wand des Seitenholms (201) und der unteren Wand des Seitenholms (201) verbunden ist; wobei der Steg (221) mit einer Kammer (222) versehen ist, die einen Leitungsführungsschlitz definiert, wobei ein hinteres Ende der Seitengleitschienenvorrichtung für ein Rollo der Lichtleiste mit einer Drucktastenschalter-Montagebohrung mit einem montierten Drucktastenschalter (404) versehen ist, wobei der Drucktastenschalter (404) leitungsgeführt mit dem Leitungsführungsschlitz verbunden und anschließend mit einer Steuerung an einem Rollokastengehäuse verbunden ist, um das Öffnen und Schließen eines Rollos zu steuern, wobei ein oberer Zubehörbefestigungsschlitz (224) und ein unterer Zubehörbefestigungsschlitz (225) von der Kammer (222) ausgehend nach oben und nach unten konvex angeordnet sind; wobei das Leuchtstreifenmontageelement ferner einen Leuchtstreifenmontagehohlraum (226) definiert, der an Seitenwänden der Kammer (222) und dem oberen Zubehörbefestigungsschlitz (224) in einer vom Seitenholm (201) abgewandten Richtung zum Fixieren des gesamten Leuchtstreifens (403) im Leuchtstreifenmontagehohlraum (226) vorgesehen ist, wobei der Leuchtstreifenmontagehohlraum (226) mit einer Lampenschirmmontage-Rastöffnung (227) in einer von den äußeren Seitenwänden der Kammer (222) und dem oberen Zubehörbefestigungsschlitz (224) weg geneigten und vom Seitenholm (201) abgewandten Weise versehen ist; und wobei ein Lampenschirm (236) in die Lampenschirmmontage-Rastöffnung (227) eingesetzt ist; wobei eine Bodenwand des Leuchtstreifenmontagehohlraums (226) mit der Bodenplatte (203) verbunden ist.

2. Seitengleitschienenvorrichtung für ein Rollo der Lichtleiste nach Anspruch 1, wobei ein Boden des Leuchtstreifenmontagehohlraums (226) mit einem geneigten Leuchtstreifeneinsatz-Montageschlitz mit einer geneigten Fläche versehen ist; wobei ein Leuchtstreifeneinsatz einen U-förmigen Schlitz (402) definiert; wobei der Leuchtstreifen (403) an einem Boden des U-förmigen Schlitzes (402) montiert ist; wobei ein zum Inneren des Leuchtstreifenmontagehohlraums (226) gerichteter Leuchtstreifeneinsatz-Rastvorsprung (401) an einer einer U-förmigen Ausnehmung des Leuchtstreifeneinsatzes entsprechenden Position an dem geneigten Leuchtstreifeneinsatz-Montageschlitz angeordnet ist und zum Begrenzen des Leuchtstreifeneinsatzes dient.

3. Seitengleitschienenvorrichtung für ein Rollo der Lichtleiste nach Anspruch 2, wobei ein Rastvorsprung des Lampenschirms (236) geneigt ausgebildet ist und der Rastvorsprung in die Lampenschirm-Rastöffnung (235) eingerastet ist; und wobei der Lampenschirm (236) eingesetzt und in einem voreingestellten Winkel schräg in die Lampenschirm-Rastöffnung (235) eingerastet ist.

4. Seitengleitschienenvorrichtung für ein Rollo der Lichtleiste nach Anspruch 3, wobei ein Neigungswinkel zwischen dem Lampenschirm (236) und dem Steg (221) im Bereich von 0 Grad bis 90 Grad liegt.

5. Seitengleitschienenvorrichtung für ein Rollo der Lichtleiste nach Anspruch 4, wobei der Neigungswinkel zwischen dem Lampenschirm (236) und dem Steg (221) 30 Grad beträgt.

## Revendications

1. Dispositif de rail coulissant latéral pour store de la lampe à bande pour automobile, comprenant un panneau de lampe à diodes électroluminescentes (LED) et un composant de fixation utilisé pour fixer le panneau de lampe à LED, et comprenant : un montant latéral (201), un élément de montage de bande lumineuse (202) utilisé pour monter une base d'une bande lumineuse, et une plaque de base (203), dans lequel le montant latéral (201) et l'élément de montage de bande lumineuse (202) sont connectés l'un à l'autre et forment ensemble avec la plaque de base (203) un dispositif de rail coulissant latéral pour store de la lampe à bande ; le dispositif de rail coulissant latéral pour store est **caractérisé en ce que** le montant latéral (201) définit une ouverture sur un premier côté configuré pour monter un store, et une rainure fonctionnelle évidée (211) communiquant avec l'ouverture formée dans le montant latéral (201) dans une direction opposée à l'élément de montage de bande lumineuse (202) ; une paroi supérieure intérieure de la rainure fonctionnelle (211) est pourvue d'une fente d'insertion de ruban adhésif intérieur (212) faisant face à l'intérieur de la rainure fonctionnelle (211), et une paroi inférieure intérieure de la rainure fonctionnelle (211) est pourvue d'une fente de drainage (213) faisant face à l'intérieur de la rainure fonctionnelle (211) ; l'élément de montage de bande lumineuse est connecté au montant latéral (201) par une nervure (221), la nervure (221) est disposée sur un second côté du montant latéral (201) opposé et éloigné du premier côté et est connectée entre la paroi supérieure du montant latéral (201) et la paroi inférieure du montant latéral (201) ; la nervure (221) est pourvue d'une chambre (222) définissant une fente de cheminement de câbles, une extrémité du dispositif de rail coulissant latéral pour store de la lampe à bande est pourvue d'un trou de montage d'interrupteur à bouton avec un interrupteur à bouton (404) monté, l'interrupteur à bouton (404) est acheminé et connecté à la fente de cheminement puis connecté à un contrôleur sur un boîtier de store, afin de commander l'ouverture et la fermeture d'un store, une fente de fixation d'accessoire supérieure (224) et une fente de fixation d'accessoire inférieure (225) sont disposées en saillie vers le haut et vers le bas depuis la chambre (222) ; l'élément de montage de bande lumineuse définit en outre une cavité de montage de bande lumineuse (226) prévue sur des parois latérales de la chambre (222) et de la fente de fixation d'accessoire supérieure (224) dans une direction opposée et éloignée du montant latéral (201) pour fixer la bande lumineuse entière (403) dans la cavité de montage de bande lumineuse (226), la cavité de montage de bande lumineuse (226) est pourvue d'une ouverture d'encastrement de montage d'abat-jour (227) d'une manière inclinée par rapport aux parois latérales extérieures de la chambre (222) et de la fente de fixation d'accessoire supérieure (224) et faisant face de manière opposée et éloignée du montant latéral (201) ; et un abat-jour (236) est inséré dans l'ouverture d'encastrement de montage d'abat-jour (227) ; une paroi inférieure de la cavité de montage de bande lumineuse (226) est connectée à la plaque de base (203).

2. Dispositif de rail coulissant latéral pour store de la lampe à bande selon la revendication 1, dans lequel un fond de la cavité de montage de bande lumineuse (226) est pourvu d'une fente de montage d'insert de bande lumineuse inclinée avec une surface inclinée ; un insert de bande lumineuse définit une fente en forme de U (402) ; la bande lumineuse (403) est montée au fond de la fente en forme de U (402) ; une saillie d'encastrement d'insert de bande lumineuse (401) qui fait face à un intérieur de la cavité de montage de bande lumineuse (226) est disposée à une position, correspondant à une encoche en U de l'insert de bande lumineuse, sur la fente de montage d'insert de bande lumineuse inclinée et est utilisée pour limiter l'insert de bande lumineuse.

3. Dispositif de rail coulissant latéral pour store de la lampe à bande selon la revendication 2, dans lequel une saillie d'encastrement de l'abat-jour (236) est inclinée, et la saillie d'encastrement s'encastre dans l'ouverture d'encastrement d'abat-jour (235) ; et l'abat-jour (236) est inséré et s'encastre obliquement dans l'ouverture d'encastrement d'abat-jour (235) selon un angle prédéterminé.

4. Dispositif de rail coulissant latéral pour store de la lampe à bande selon la revendication 3, dans lequel un angle d'inclinaison entre l'abat-jour (236) et la nervure (221) est compris entre 0 degré et 90 degrés.

5. Dispositif de rail coulissant latéral pour store de la lampe à bande selon la revendication 4, dans lequel l'angle d'inclinaison entre l'abat-jour (236) et la nervure (221) est de 30 degrés.
